Europäisches Patentamt

European Patent Office

Office européen des brevets

(19)

(11) **EP 0 623 885 B1**

(12) **EUROPÄISCHE PATENTSCHRIFT**

(45) Veröffentlichungstag und Bekanntmachung des Hinweises auf die Patenterteilung:
**25.02.1998  Patentblatt 1998/09**

(51) Int Cl.$^6$: **G01N 21/89**, G06T 7/40

(21) Anmeldenummer: **94106089.9**

(22) Anmeldetag: **20.04.1994**

(54) **Einrichtung zum Gewinnen von Klassifikationsinformationen**

Classification information acquisition device

Dispositif d'acquisition d'informations de classification

(84) Benannte Vertragsstaaten:
**AT CH DE DK FR GB IT LI NL SE**

(30) Priorität: **07.05.1993  DE 4315202**

(43) Veröffentlichungstag der Anmeldung:
**09.11.1994  Patentblatt 1994/45**

(73) Patentinhaber: **AUTRONIC Gesellschaft für Bildverarbeitung und Systeme mbH D-76229 Karlsruhe (DE)**

(72) Erfinder: **Hetterich, Norbert, Dipl.-Ing. D-90491 Nürnberg (DE)**

(74) Vertreter: **Hofmann, Gerhard, Dipl.-Ing. Patentassessor et al Stephanstrasse 49 90478 Nürnberg (DE)**

(56) Entgegenhaltungen:
**DE-A- 3 440 473                US-A- 5 046 120**

**Beschreibung**

Die Erfindung betrifft eine Einrichtung gemäß dem Oberbegriff des Anspruches 1.

Eine solche Einrichtung ist in der Arbeit von W. Pölzleitner und G. Schwingshakl "Real-time surface grading of profiled wooden boards" in INDUSTRIAL METROLOGY, Vol. 2, Nos. 3 - 4, 1992, pp. 283 - 298, beschrieben. Es geht um das Problem der Gütezuordnung gehobelter roher Bretter hinsichtlich der Art und Verteilung von Fehlstellen, wie Rissen, Löchern, dunklen Aststücken und Harzansammlungen nach Maßgabe einer etwa vom Normenausschuß Holzwirtschaft und Möbel in DIN 68 126 Teil 3 festgelegten dreiklassigen Gütesortierung. Die menschliche, also subjektive Gütesortierung ist schon wenig reproduzierbar und beim hohen Bretterausstoß (bis zu 3 m/s) moderner Hobel-Maschinen visuell und manuell kaum noch durchführbar. Jener Aufsatz befaßt sich deshalb mit dem Einsatz moderner Bilderfassungs- und Datenverarbeitungsmethoden zum Gewinnen von objektiven Gütekriterien. Für die Reduktion des enorm großen Datenanfalles auf einen für die Fehlerklassifikation anwendbar abstrahierten Informationsumfang ist dort allerdings der enorme Aufwand von neun parallel arbeitenden Prozessoren zusätzlich zu speziell angepaßten Hardwareschaltungen erforderlich; und beim praktischen Test jenes speziellen Lösungs-Ansatzes hat sich herausgestellt, daß auch die dort eingesetzte Filtergewichtung für die differentielle Kantenbestimmung von Fehlstellen im Oberflächenmuster zu einer Nivellierung führt, die letztlich den angestrebten universellen Einsatz für eindeutige Fehlerklassifikation in Frage stellt, wenn nicht für jede Holzart erneut eine zeitaufwendige Filter-Optimierung durchgeführt wird.

In Erkenntnis dieser Gegebenheiten liegt der Erfindung die Aufgabe zugrunde, eine universelle Klassifikationsinformation für die Beurteilung von Mustern wie Fehlstellen in Oberflächenstrukturen zu gewinnen, die bei wesentlich verringertem Aufwand an Prozessorleistung ibs. eine eindeutigere Fehlstellen-Randdetektion für die sich anschließende Software-Musterklassifikation erbringt.

Diese Aufgabe ist erfindungsgemäß im wesentlichen dadurch gelöst, daß die Einrichtung gattungsgemäßer Art auch nach dem Kennzeichnungsteil des Hauptanspruches ausgelegt ist.

Diese Lösung basiert also im wesentlichen auf einer Echtzeit-Vorverarbeitung zur Hardware-Datenreduktion. Dafür wird zunächst unter Beibehaltung der Bit-Breite eine Pixel-Reduktion in der Video-Grauwertinformation über die momentan zur Verarbeitung anstehende Sichtzeile durchgeführt. Daraufhin erfolgt für jeden der verbliebenen Pixel der Sichtzeile eine Bitbreiten-Halbierung auf eine Musterinformation, in der zwei Intensitätsstufen (wie etwa "schwarz" und "braun") verknüpft sind mit zwei Gradienteninformationen (wie etwa "Musterrand" - "kein Musterrand"). Dafür wird die Randinformation aus der sukzessiven Wertung der Intensitätsinformationen von jeweils drei nebeneinanderliegenden, der noch betrachteten Pixel der aktuellen Sichtzeile mittels einer pixelweise verschobenen Gewichtsschablone gewonnen, die jeweils alle aufeinanderfolgenden Intensitätsinformationen unterdrückt, die in der gleichen Bandbreite liegen; während ein Intensitätssprung zwischen gegeneinander versetzten Bandbreiten zwischen dem ersten und zweiten bzw. zwischen dem zweiten und dritten Pixel der jeweils betrachteten Dreiergruppe eine Randinformation in oder gegen Betrachtungsrichtung darstellt.

Gleiche Musterinformationen in der Zeile nebeneinanderliegender und einander orthogonal oder diagonal benachbarter Pixel jeweils der aktuellen und der zurückliegenden Sichtzeile werden durch Zuordnung einer Objektnummer individualisiert. Dabei entfallen alle diejenigen der noch betrachteten Pixel, die keine Musterinformation beinhalten. Die nächste Objektnummer wird vergeben, wenn sich in keiner Richtung (horizontal, vertikal oder diagonal) die bisherige Musterinformation fortsetzt. Die Flächenrandinformation eines so quer zur Sichtzeile wachsenden zweidimensionalen Objektes weist nun nur noch ein so geringes Datenvolumen auf, daß sie mit Standard-Rechnerprogrammen zur Bestimmung und Bewertung von Formen und von gegenseitigen Positionen einer Musterklassifikation unterzogen werden kann, beispielsweise zur automatischen Gewinnung von Fehlerklassenaussagen (Sortierklasseninformation).

Als ideal hat sich für die Randdetektion eine Gewichtungsschablone erwiesen, mittels derer die Grauwertintensität des mittleren von drei gerade erfaßten einander benachbarten Pixeln stets mit dem Faktor "-1" bewertet wird; während die Intensität desjenigen benachbarten Pixels, das dann gerade jenseits eines Muster-Randes liegt, mit "+1" bewertet und das auf der anderen Seite benachbarte Pixel durch den Faktor "0" unterdrückt wird.

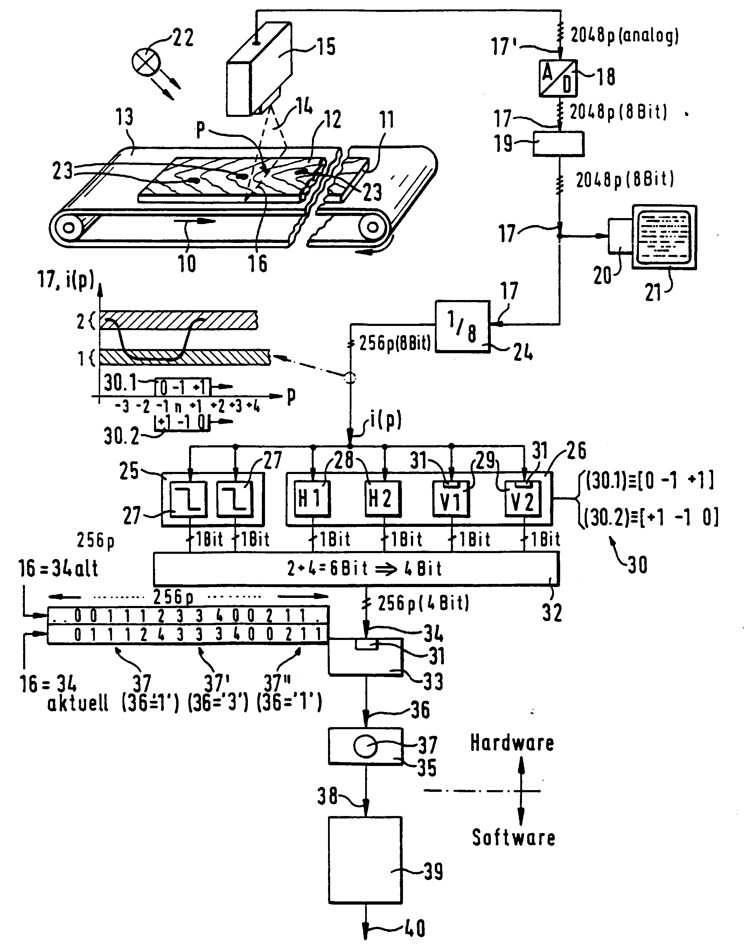

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche stark abstrahiert nach Art eines einpoligen Blockschaltbildes skizzierten bevorzugten Realisierungsbeispiels zur erfindungsgemäßen Lösung. Die einzige Figur der Zeichnung zeigt eine Hardware-Schaltung zur Reduktion des Datenflusses vor der eigentlichen, softwaremäßig durchzuführenden Muster-Klassifikation.

Das auf der Oberfläche eines Trägers 11 sichtbare Muster 12 ist im dargestellten und bevorzugten Beispielsfalle die Struktur eines gehobelten Profilbrettes, das in Längsrichtung von einer Fördereinrichtung 13 quer zum linienförmigen Blickfeld 14 vor dem Objektiv einer Zeilenkamera 15 fortbewegt wird. Deren Sichtzeile 16 hat typisch eine Auflösung von 2 048 Pixel p. Die Intensität von deren Ausgangssignalen ist abhängig von der Helligkeit des dem jeweilien Pixel zugeordneten Punktes im von der Sichtzeile 16 überdeckten schmalen Streifen des Musters 12. Grundsätzlich könnte auch eine Mehrzahl von quer zur Förderrichtung 10 versetzten, parallel arbeitenden Zeilenkameras 15 bzw. eine Flächenkamera eingesetzt werden; der Aufwand für die Bewältigung des dann entsprechend vervielfachten Datenanfalles wäre wirtschaftlich aber nicht mehr sinnvoll.

Die analoge Grauwertinformation 17' eines jeden der 2 048 Pixel p der Sichtzeile 16 wird in einem Analog-Digital-Wandler in eine acht Bit umfassende binäre Grauwertinformation 17 umgesetzt. In einer Kontraststufe 19 wird der Grauwert-Betrag schwach angeregter Pixel erhöht, um diese Teile des Musters 12 bei der späteren Schwellwert-Verarbeitung nicht außer Betracht zu lassen.

Bei dem Muster 12 kann es sich um ein Dekor handeln, etwa um ein Wirk- oder Druckmuster, oder aber um Maserungen oder Fehlstellen in der Oberflächenstruktur beispielsweise von Papierbahnen, von Häuten oder wie dargestellt von Parkett- oder Profilbrettern. In letzterem Falle interessiert nicht die Maserung als solche, die wird deshalb durch Bestrahlung aus einer Rotlichtquelle 22 für die Zeilenkamera 15 weitgehend unsichtbar gemacht. Was für die Gütebestimmung dieses speziellen Produktes interessiert, das ist das Vorhandensein sowie gegebenenfalls die Größe und die Lage von Fehlstellen 21 wie etwa Löchern oder schwarzen Ästen (die später herausfallen und Löcher hinterlassen können) sowie Rissen im Holz und die beim späteren Lackieren der Holzoberfläche sehr störenden Harzansammlungen. Um auch noch schmale Risse zu erfassen, ist, bei der typischen Transportgeschwindigkeit in der Größenordnung von bis zu 3 m/s am Ausgang einer modernen Hobelmaschine, eine Auflösung in der Größenordnung von 1 mm in Vorschubrichtung 10 zu gewährleisten, was einer Aufnahmezeit von ca. 300 ms pro Zeile und damit einer Zeilenbildfrequenz von ca. 3 kHz entspricht. Das bedingt eine enorm schnelle Signalverarbeitung. Die kann zwar grundsätzlich durch eine Vielzahl parallel arbeitender Prozessoren nach dem Stande der Technik realisiert werden, aber eine solche Realisierung ist überaus kostspielig und deshalb für den industriellen Einsatz kaum geeignet.

Die ursprüngliche oder die nicht-linear modifizierte digitalisierte Grauwertinformation 17 kann als Grautonbild in einem Speicher 20 sehr großer Kapazität abgespeichert und beispielsweise daraus zur Darstellung auf einem Bildgerät 21 ausgelesen werden. Für die Echtzeit-Musterauswertung ist aber eine drastische Datenreduktion erforderlich, natürlich möglichst ohne Verlust signifikanter Informationsinhalte.

Um die Datenflut zu reduzieren, wird zunächst die Anzahl der aus einer Sichtzeile 16 zu verarbeitenden Pixel p drastisch reduziert. Dafür wird die digitalisierte Grauwertinformation 17 in ein Reduktionsfilter 24 eingespeist. Dessen Funktion beruht darauf, aus beispielsweise je acht nebeneinander gelegenen Pixeln p in der Sichtzeile 16 nur eines, nämlich hier das dunkelste für die Weiterverarbeitung auszugeben. Hinter diesem Reduktionsfilter 24 erscheinen deshalb nur noch Intensitätswerte i[p] von einem Achtel der ursprünglichen Pixelanzahl und damit eine jeweils acht Bit breite digitale Intensitätsinformation von nur noch 256 Pixeln p aus der aktuell betrachteten Zeile 16. Denn alle Intensitätswerte, die innerhalb einer Gruppe von in diesem Beispiel acht einander benachbarten Pixeln p heller sind, als der dunkelste in diesem Teil der Sichtzeile 16 erfaßte, gehören weniger wahrscheinlich zu einer Fehlstelle 23, als jener dunkelste Punkt in dieser Zeile 16.

Für die weitere Reduzierung der Datenflut, nämlich nun auf eine geringere Bit-Breite für die verbliebenen Pixel p, ist die Parallelschaltung eines Farbintensitätsfilters 25 und eines Kantenfilters 26 vorgesehen.

Das Farbintensitätsfilter 25 weist im wesentlichen zwei Intensitätsschwellen 27 auf. Die eine spricht bei extrem niedriger Intensität der momentanen Grauwertinformation 17, die andere bei weniger geringer Grauwertinformation an. Das Farbintensitätsfilter 25 liefert also eine Information von 2 Bit Breite, beinhaltend die Pixel-Aussage "schwarz" oder "braun" (bzw. ohne Aussage bei der hohen Intensität eines fehlerfreien und deshalb hell aufgenommenen Punktes in der Sichtzeile 16).

Das Kantenfilter 26 unterteilt sich in zwei Horizontalfilter 28 und zwei Vertikalfilter 29, wobei als die Horizontale die Richtung einer Sichtzeile 16 und als die Vertikale die orthogonal dazu orientierte Transportrichtung 10, also bezogen auf das Muster 12 der Versatz aufeinanderfolgend erfaßter Sichtzeilen 16 definiert sei. Diese Filter 28, 29 haben im wesentlichen differenzierende Funktion, aber mit den zusätzlichen Eigenschaften einer Schwellenauswertung und vor allen einer Kantenlagenerfassung. Die Funktion ist dadurch beschreibbar, daß eine Gewichtungsschablone 30.1 bzw. 30.2 unter Erfassen jeweils dreier einander benachbarter Pixel-Intensitäten i[p] mit jeweils p = {(n-1), (n), (n+1)} über alle hinter dem Reduktionsfilter 24 noch anstehenden 256 Pixel p der aktuell betrachteten Sichtzeile 16 verschoben und die Intensität i[p] des dabei gerade erfaßten Pixel p mit der zugeordneten Schablonengewichtung multipliziert wird. Durch Schwellenbetrachtung sind auch die Intensitätswerte i[p] grob quantisiert, so daß sie im dargestellten Beispielsfalle etwa nur die Werte "1" oder "2" annehmen können. Das ergibt für die dargestellte Schablonenstellung 30.1 die Gewichtung zur Detektion eines rechten Randes für die Pixel p = {(n-1), (n), (n+1)} die Werte

$$0*1 + -1*1 + +1*2 = 2 - 1 = 1$$

und dieselbe Stellung der Gewichtungsschablone 30.2 für Detektion der linken (rückwärtigen) Musterkante

$$+1*1 + -1*1 + 0*2 = 0 + 0 = 0.$$

Das bedeutet, die Vorwärts-Schablone 30.1 hat eine MusterKante entdeckt, die Rückwärts-Schablone 30.2 nicht.

Das entscheidende an der Funktion dieser Datentreduzierung ohne entscheidenden Verlust an Musterinformation oder auch nur an Verwischung von Musterkonturen ist die spezielle, angegebene Dimensionierung der Vorwärts- und Rückwärts-Gewichtsschablonen 30.1, 30.2. Denn wenn im einen Falle die Intensitäten der beiden rechts gelegenen Pixel (n, n+1) gleich sind, oder wenn im anderen Falle die Intensitäten der beiden links gelegenen (n-1, n) von den drei Pixeln gleich sind, heben sie sich auf, und die Summe über alle drei gewichteten Werte ist Null. Ein von Null unterschiedliches Ergebnis kann sich nur einstellen, wenn im einen Falle zwischen den beiden rechten und im anderen Falle zwischen den beiden linken Pixeln p ein die Ansprechschwellen übersteigender Intensitätssprung vorliegt. Das aber bedeutet, daß in dieser Sichtzeile im Muster 12 ein rechter bzw. ein linker Rand einer sich aus der Oberfläche durch deutlich geringere Helligkeitsintensität abzeichnenden Erscheinung vorliegt.

Die Vertikalfilter 29 weisen die gleichen Gewichtungsschablonen 30 wie die Horizontalfilter 28 auf, nun aber mit der Besonderheit, daß die in Transportrichtung 10 auf dem Muster 12 aufeinanderfolgenden Pixel p der Gewichtung unterworfen werden, also auch Pixel p außerhalb der gerade erfaßten Sichtzeile 16. Deshalb sind die Vertikalfilter 29 mit Zwischenspeichern 31 für die in Transportrichtung 10 aufeinanderfolgenden Intensitätswerte i[p] der vorangegangenen Zeile 16 ausgestattet, um die beschriebene Schablonenverschiebung zur Detektion von (nun vorderen und rückwärtigen) Kanten von Fehlstellen 23 wieder rechnerisch durchführen zu können.

Das Kantenfilter 26 liefert also eine Vier-Bit-Information an eine Auswahlschaltung 32, zu der die Zwei-Bit-Information von Intensitätsfilter 25 hinzukommt. Zur weiteren Reduktion der Bit-Breite werden aus der Auswahlschaltung 32, die intern als Tabelle organisiert ist, die beiden Farbwerte aus dem Farbintensitätsfilter 25 jeweils verknüpft mit einer aktuellen Gradienten- (also Fehlerrand-)Information, so daß für jeden in einer aktuellen Sichtzeile 16 noch interessierenden der 256 Pixel p eine Vier-Bit-Information darüber übrigbleibt, ob momentan im Muster ein brauner oder ein schwarzer Wert - in der Mitte einer Fehlstelle 23 oder aber am Rande, also in Verknüpfung mit irgendeiner Kanten- oder Gradienteninformation - vorliegt.

Um nun diese auf den jeweiligen Pixel p bezogene Erkenntnis zu zweidimensionalen Aussagen über Fehlstellen 23 zu verdichten, folgt der Tabellen-Auswahlschaltung 32 ein Längencodierer 33. Der wertet die Vier-Bit-Musterinformation 34 aus der Tabellen-Auswahlschaltung 32 daraufhin aus, wie diese sich in den aufeinanderfolgenden der in einer Sichtzeile 16 noch betrachteten 256 Pixel p ändert. Den meisten der Pixeln p wird der Wert Null zugeordnet sein, weil sie nicht auf Fehlstellen 23 liegen. Es interessieren also nur noch die einander benachbarten Pixel p, bei denen in der Musterinformation 34 andere Werte als Null vorkommen.

Die Vierbit-Musterinformation 34 kann für jedes Pixel p nur die Werte "0, 1, 2, 3 und 4" annehmen. "1" und "3" sind unterschiedliche Farbflächen (Grautonintensitäten i[p]), "2" und "4" sind deren besonders auffallenden Ränder (gleichgültig, ob horizontal links/rechts oder vertikal vorne/hinten). Wenn übereinstimmende Flächenwerte (also "1" oder "3") einander horizontal (also in einer Zeile 16) benachbart sind, erhält diese Längeninformation 36 in einem sogen. Segmentierer 35 eine Objektnummer 37 zur Identifikation zugeordnet, verbunden mit einer Aussage über die Anzahl lückenlos nebeneinanderliegender Pixel p, welche gerade diese Musterinformation 34 aufweisen. Diese einmal vergebene Objektnummer 37 wird beibehalten, wenn und insoweit sich in der nächstfolgenden Zeile 16 die identische Musterinformation 34 direkt oder schräg benachbart (also orthogonal oder diagonal) wiederholt, bis sich sowohl in orthogonaler wie auch in diagonaler Nachbarschaft nur eine Randinformation ("2" oder "4") bzw. eine andere Musterinformation 34 ("3" oder "1") bzw. nur noch "0" einstellt, das Muster mit dieser Zeilennummer 37 also beendet ist. Zweckmäßigerweise wird auch an eine orthogonal oder diagonal lückenlose Randinformation "2" bzw. "4" eine Objektnummer 37, 37', 37", ... vergeben. Wenn zwei zunächst horizontal benachbarte Objekte gleicher Musterinformation 34 allmählich z. B. V-förmig zusammenwachsen, dann wird vom Segmentierer 35 eine der ursprünglich vergebenen Objektnummern 37 gelöscht, und in der Weiterverarbeitung als Klassifikationsinformation 38 wird diese verzweigte geometrische Figur komplett mit einer einheitlichen Objektnummer 37 behandelt.

Indem vom Längencodierer 33 also an den Segmentierer 35 für die jeweils aktuelle Sichtzeile 16 nur noch Längeninformationen 36 darüber ausgegeben werden, welcher Intensitätswert (größer als Null) wie oft ohne Unterbrechung nebeneinander vorkommt, ergibt sich eine ganz erhebliche weitere Datenreduktion ohne Verlust über geometrische Gegebenheiten. Für die praktischen Belange reicht dann der Zahlenvorrat einer auf 32 Bit codierten Objektnummernfolge völlig aus.

So sind die einzelnen Fehlstellen 23 in der Klassifikationsinformation 38 am Ausgang des Segmentierers 35 durch individuelle Objektnummern 37 und innerhalb dieser jeweils hinsichtlich Farbe und Kantenlage der Fehlstelle 23 charakterisiert. Diese durch Datenreduktion gewonnene und mittels Objektnummern 37 individualisierten Klassifikationsinformationen 38 können nun in einem programmierten Klassifizierer 39, also softwaremäßig, im Vergleich zu vorgegebenen geometrischen Strukturen daraufhin untersucht und bewertet werden, wie die Verteilung der Fehlstellen 23 hinsichtlich Form und Farbintensität ist, um etwa Sortierklasseninformation 40 zur Steuerung einer Sortierweiche für Profilbretter auszugeben.

## Patentansprüche

1. Einrichtung zum Gewinnen von Klassifikationsinformationen (38) aus Video-Grauwertinformationen (17) von längs gegeneinander parallel versetzter Sichtzeilen (16) abgetasteten Mustern (12), insbesondere für die Sortierung von Profilbrettern nach Maßgabe der Art und Verteilung von auf ihrer Oberfläche opto-elektronisch erfaßbaren Fehlstellen (23),
dadurch gekennzeichnet,
daß zunächst hardwaremäßig aus jeweils einer Folge einander in der Sichtzeile (16) benachbarter Pixel (p) nur noch derjenige Pixel (p), der in dieser Folge eine Grauwertinformation (17) extremer Amplitude aufweist, sowohl auf ein Farbintensitätsfilter (25) wie auch auf ein Kantenfilter (26) geschaltet ist, worin die verbliebenen Intensitätswerte (i[p]) einer Sichtzeile (16) in eine Zwei-Bit-Intensitätsinformation und die Intensitätswerte (i[p]) auch aufeinanderfolgender Sichtzeilen (16) mittels Gewichtungsschablonen (30.1, 30.2) zu Vier-Bit-Kanteninformationen hinsichtlich einer Muster-Begrenzung in Richtung der Sichtzeile (16) und orthogonal dazu umgesetzt werden, mit anschließender Verknüpfung und Reduktion in einer Tabellenauswahlschaltung (32) zu Vier-Bit-Musterinformationen (34) nach Maßgabe von Intensität und Kantengradienten für jeden der verbliebenen Pixel (p); woraufhin diese Musterinformationen (34) hinsichtlich pixelweise einander horizontal in der aktuellen Zeile (16) sowie orthogonal und diagonal benachbarter Pixel (p) in aufeinanderfolgenden Sichtzeilen (16) bei übereinstimmendem Informationsinhalten durch Zuordnung von Objektnummern (37) voneinander separiert werden, um als Folge individueller geometrischer Klassifikationsinformationen (38) dann von einem Klassifikationsprogramm zur Formbestimmung und -Bewertung auf z. B. Fehlstellen (23) ausgewertet zu werden.

2. Einrichtung nach Anspruch 1,
dadurch gekennzeichnet,
daß vor der Gruppen-Reduktion eine Anhebung der Intensitätswerte (i) von Pixeln (p) schwacher Intensität in der Grauwertinformation (17) vorgesehen ist.

3. Einrichtung nach Anspruch 1 oder 2,
dadurch gekennzeichnet,
daß vor der Gruppenreduktion eine Abspeicherung der Grauwertinformationen (17) zur Darbietung auf einem Bildgerät (21) vorgesehen ist.

4. Einrichtung nach einem der vorangehenden Ansprüche,
dadurch gekennzeichnet,
daß die Oberflächen von Holzbrettern, in denen Fehlstellen (23) zu Klassifikationsinformationen (38) führen sollen, zur Unterdrückung der Maserungseinflüsse auf die Intensitätswerte (i[p]) aus einer Rotlichtquelle (22) bestrahlt werden.

5. Einrichtung nach einem der vorangehenden Ansprüche,
dadurch gekennzeichnet,
daß die Gewichtungsschablonen (30) für die Detektion eines Muster-Randes jeweils drei nebeneinanderliegende Pixel (p) erfassen und deren Intensitätswerte (i[p]) im mittleren Pixel stets mit dem Faktor "-1" bewerten, dagegen den Pixel (p), der einen in oder gegen Schablonen-Verlagerungsrichtung gelegenem Muster-Rand zugeordnet sein könnte, mit dem Faktor "+1" und den verbleibenden Pixel (p) mit dem Faktor "0".

6. Einrichtung nach einem der vorangehenden Ansprüche,
dadurch gekennzeichnet,
daß im Kantenfilter (26) für die Kantenbestimmung und im Längencodierer (33) für die Nachbarschaftssuche jeweils quer zur Sichtzeile (16) Zwischenspeicher (31) für die entsprechenden Pixelintensitäten (i[p]) der vorangehend erfaßten Sichtzeile (16) vorgesehen sind.

7. Einrichtung nach einem der vorangehenden Ansprüche,
dadurch gekennzeichnet,
daß im Farbintensitätsfilter (25) zwei Intensitätsschwellen (27) mit deutlich voneinander unterschiedlichen Grauwert-Schwellen parallel arbeiten.

8. Einrichtung nach Anspruch 7,
dadurch gekennzeichnet,
daß die Intensitätswerte (i[p]) nach der Farbintensitäts- und Kantenfilterung aus der Tabellenauswahlschaltung (32) zu einer Musterinformation (34) reduzierter Bit-Breite ausgelesen werden, welche die beiden Intensitäten und eine Aussage darüber erfaßt, ob zur jeweiligen Intensität eine Kante vorliegt, oder nicht.

## Claims

1. Device for deriving items of classification information (38) from items of video gray-scale-value information (17) of samples (12) scanned along lines of sight (16) displaced so as to be parallel in relation to one another,
particularly for grading profiled boards according to the type and distribution of defects (23) which can be opto-electronically detected on their surfaces, characterized in that

first of all, by means of hardware, each time from a sequence of pixels (p), which are adjacent to one another in the line of sight (16), only that pixel (p), which in this sequence has an item of gray-scale-value information (17) of extreme amplitude, is connected both to a colour-intensity filter (25) and to an edge filter (26), in which the remaining intensity values (i[p]) of one line of sight (16) are converted into a two-bit item of intensity information and the intensity values (i[p]) of successive lines of sight (16) are also converted by means of weighting masks (30.1, 30.2) to four-bit items of edge information as regards a sample limitation in direction of the line of sight (16) and orthogonally to it, with subsequent linkage and reduction in a table selection circuit (32) to four-bit items of sample information (34) according to intensity and edge gradients for each of the remaining pixels (p); after which these items of sample information (34) are separated from one another as regards pixels (p) which are horizontally adjacent to one another in the manner of pixels in the actual line (16) and also pixels (p) which are orthogonally and diagonally adjacent to one another in the manner of pixels in successive lines of sight (16) with corresponding information content by allocating object numbers (37) so as then to be evaluated as a sequence of individual geometric items of classification information (38) by a classification programme for determining and evaluating shape, for example with regard to defects (23).

2. Device according to Claim 1, characterized in that, before the group reduction, an accentuation of the intensity values (i) of pixels (p) of weak intensity in the item of gray-scale-value information (17) is provided.

3. Device according to Claim 1 or 2, characterized in that, before the group reduction, a storage of the items of gray-scale-value information (17) is provided for presentation on a display unit (21).

4. Device according to one of the preceding claims, characterized in that the surfaces of wooden boards, in which defects (23) should lead to items of classification information (38) are illuminated from a red-light source (22) to suppress the graining influences on the intensity values (i[p]).

5. Device according to one of the preceding claims, characterized in that the weighting masks (30) for detecting a sample edge each detect three pixels (p) lying side by side and always rate their intensity values (i[p]) in the middle pixel with the factor "-1", on the other hand the pixel (p), which could be allocated a sample edge located in or counter to the mask's direction of displacement, is rated with the factor "+1" and the remaining pixel (p) with the factor "0".

6. Device according to one of the preceding claims, characterized in that in the edge filter (25) for determining the edge and in the length coder (33) for the proximity search, in each case intermediate stores (31) are provided at right angles to the line of sight (16) for the corresponding pixel intensities (i[p]) of the previously registered line of sight (16).

7. Device according to one of the preceding claims, characterized in that in the colour intensity filter (25), two intensity thresholds (27) with clearly different gray-scale-value thresholds work in parallel.

8. Device according to Claim 7, characterized in that, after the colour-intensity and edge filtering, the intensity values (i[p]) are read out from the table selection circuit (32) for an item of sample information (34) of reduced bit width, which registers the two intensities and a statement as to whether or not there is an edge for the respective intensity.

**Revendications**

1. Dispositif d'obtention d'informations de classification (38) à partir d'informations de valeur de gris vidéo (17) venant de lignes visibles (16), décalées longitudinalement parallèlement les une aux autres, appartenant à des motifs (12) ayant été explorés, en particulier pour le tri de planches profilées, d'après les indications du type et de la distribution des sites d'erreurs (23) pouvant être appréhendés de façon optoélectronique sur leur surface, caractérisé en ce que d'abord, par le matériel, à partir chaque fois d'une suite de pixels (p), voisins les une les autres dans la ligne visible (16), on ne connecte, tant sur un filtre d'intensité de couleur (25) qu'également sur un filtre d'arêtes (26), que le pixel (p) qui, dans cette succession, présente une information de valeur de gris (17) d'amplitude extrême, les valeurs d'intensité (i[p]) subsistant d'une ligne visible (16) étant converties en une information d'intensité à deux bits et également les valeurs d'intensité (i[p]) de lignes visibles (16) se suivant étant converties, par des gabarits de pondération (30.1, 30.2), en des informations d'arêtes à quatre bits quant à une limitation de motifs, dans la direction de la ligne visible (16) et perpendiculairement par rapport à celle-ci, avec, subséquemment, une combinaison ou une réduction dans un circuit de sélection sur tableau (32), pour donner des informations de motifs à quatre bits (34) d'après l'indication de l'intensité et des gradients d'arêtes pour chacun des pixels (p) subsistant; suite à quoi ces informations de motifs (34), eu égard à un mode pixel, pour des pixels voisins (p) horizontalement dans la ligne actuelle (16) ainsi que perpendiculairement et en diagonale, dans des lignes visibles (16) successives, sont séparées les unes des autres lorsque les contenus des informations coïncident, ceci étant opéré par une association de numéros d'objets (37), afin, par suite, d'évaluer les informations de classification (38) géométriques individuelles, par un programme de classification, pour effectuer une détermination et une évaluation de la forme, par exemple sur les sites d'erreurs (23).

2. Dispositif selon la revendication 1, caractérisé en ce que, avant la réduction par groupes, on prévoit une augmentation des valeurs d'intensité (i) des pixels (p) de faible intensité, dans l'information de valeur de gris (17).

3. Dispositif selon l'une des revendications 1 ou 2, caractérisé en ce que, avant la réduction par groupes, est prévue une mémorisation des informations de valeurs de gris (17) dans le but d'une présentation sur un appareil d'imagerie (21).

4. Dispositif selon l'une des revendications précédentes, caractérisé en ce que les surfaces des planches en bois, dans lesquelles des sites d'erreurs (23) doivent mener à des informations de classification (38), sont irradiées à partir d'une source de lumière rouge (22), en vue de supprimer les influences de madrure sur les valeurs d'intensité (i[p]).

5. Dispositif selon l'une des revendications précédentes, caractérisé en ce que les gabarits de pondération (30) destinés à la détection d'un bord de motif appréhendent chacun trois pixels (p) situés les uns à côtés des autres et leur valeur d'intensité (i[p]) dans le pixel médian est toujours évaluée avec le facteur "-1", alors que, par contre, le pixel (p), qui pourrait être associé à un bord de motif placé dans ou à l'inverse de la direction de déplacement des gabarits, est évalué avec le facteur "+1" et le pixel (p) restant est évalué avec le facteur "0".

6. Dispositif selon l'une des revendications précédentes, caractérisé en ce que, dans le filtre à arêtes (26) utilisé pour la détermination des arêtes et dans le codeur de longueur (33) destiné aux recherches de voisinage chaque fois opérées transversalement par rapport à la ligne visible (16), sont prévues des mémoires intermédiaires (31) conçues pour stocker les intensités de pixels (i[p]) correspondantes de la ligne visible (16) appréhendée précédemment.

7. Dispositif selon l'une des revendications précédentes, caractérisé en ce que, dans le filtre d'intensité de couleur (25) travaillent en parallèle deux seuils d'intensité (27), ayant des seuils de niveau de gris nettement différents l'un de l'autre.

8. Dispositif selon la revendication 7, caractérisé en ce que les valeurs d'intensité (i[p]) sont lues après filtrage de l'intensité de lumière et filtrage des arêtes, à partir d'un circuit de sélection à tableau (32), pour donner une information de motif (34) à largeur de bit réduite, qui appréhende les deux intensités et permet d'en tirer des conclusions dictant si, pour l'intensité respective, on est en présence d'une arête ou non.